# EUROPÄISCHE PATENTSCHRIFT

(11) **EP 0 781 199 B1**
(45) Veröffentlichungstag und Bekanntmachung des Hinweises auf die Patenterteilung: **20.12.2000**
(21) Anmeldenummer: 95931992.2
(22) Anmeldetag: 05.09.1995
(51) Int. Cl.: B32B 9/06, B32B 5/18

(54) **SANDWICHPLATTE AUS STÄRKESCHAUM**
SANDWICH PANEL MADE OF STARCH FOAM
PANNEAU SANDWICH EN MOUSSE D'AMIDON

(30) Priorität: 06.09.1994 DE 4431755
(43) Veröffentlichungstag der Anmeldung: 02.07.1997
(73) Patentinhaber: bio-tec Biologische Naturverpackungen GmbH & Co. KG, 46446 Emmerich (DE)
(72) Erfinder: LÖRCKS, Jürgen, D-46459 Rees (DE); POMMERANZ, Winfried, D-32130 Enger (DE); SCHMIDT, Harald, D-46446 Emmerich (DE)
(74) Vertreter: VOSSIUS & PARTNER
(86) Internationale Anmeldenummer: EP9503488
(87) Internationale Veröffentlichungsnummer: WO9607539

(56) Entgegenhaltungen:
- EP-A- 0 376 201
- WO-A-94/05492
- WO-A-95/02000
- GB-A- 2 221 869

## Beschreibung

Die Erfindung betrifft eine biologisch abbaubare Sandwichplatte auf der Basis von Stärkeschaum und ein Verfahren zu deren Herstellung.

Bekannt sind Verbundmaterialien bzw. Verbundplatten, die einen Kern aufweisen, der mit Polyurethanschaum oder Polystyrolschaum umhüllt ist. Derartige Kunststoffe sind in der Entsorgung problematisch, da sie praktisch nicht verrotten und erst nach einem Sortiervorgang recyclebar sind.

Aus der DE-A-42 28 779 ist ein Schichtverbundmaterial bekannt, bei dem die Schichten aus gehärteten Stärkeschaum und einem weiteren Schichtmaterial bestehen. Das Verfahren zur Herstellung des Stärkeschaumes und des Schichtverbundmaterials läuft mehrstufig ab. Ferner ist ein Aushärten des Stärkeschaumes vorgesehen, um die Verbindung mit dem weiteren Schichtmaterial herzustellen. Die WO 92/16584 betrifft eine biologisch abbaubare Polymermischung auf Basis destrukturierter Stärke mit synthetischen Additiven zur Herstellung von Formteilen nach üblichen Verfahrenstechniken.

Der Erfindung liegt die Aufgabe zugrunde, eine biologisch abbaubare Sandwichplatte bereitzustellen, die vielseitig anwendbar ist und deren Herstellungsverfahren einfach und kostengünstig ist.

Diese Aufgabe wird mit den Merkmalen der Patentansprüche gelöst.

In einer bevorzugten Ausführungsform wird zur Herstellung eines Sandwichmaterials mit einem biologisch abbaubaren Deckmaterial aus Papier und/oder Pappe und/oder Folie und einem Kern aus extrudiertem Stärkeschaum ein kontinuierliches Verfahren verwendet, wobei ein Stärkeschaum in einem Extrusionsverfahren erzeugt, in situ zwischen Papier- bzw. Kartonbahnen und/oder Folie eingebracht und in einer kontinuierlich arbeitenden Rollenpresse verpreßt und verarbeitet wird. Die Anzahl der Papier- und Stärkeschaumschichten ist beliebig. Das nach diesem Verfahren erhaltene Sandwichmaterial wird bei Querschnitten unter 20 mm und einer weichen, flexiblen Einstellung des Stärkeschaumes endlos als Rollenware gefertigt. Bei harter Einstellung des Stärkeschaumes und/oder Querschnitten, die größer als 20 mm sind, werden die Sandwichplatten nach dem Preßvorgang auf Format geschnitten.

Je nach Anforderungsprofil des Sandwichmaterials kann das spezifische Gewicht des Stärkeschaumkerns 10 bis 250 kg/m³ und das Flächengewicht der Papier- und/oder Karton- und/oder Foliendeckschichten 10 bis 800 g/m² betragen. Die von dieser Erfindung zur Verfügung gestellten Sandwichplatten erfüllen den gleichen Anwendungszweck als Verpackungsmaterial, als Baumaterial zur Kälte-, Wärme- oder Schallisolation, als Transport- und Stoßschutz, als Display und Träger für Plakate, Poster, Bilder und Aufdrucke und sind im Papierkreislauf recyclebar.

Die Vorteile der erfindungsgemäßen Sandwichplatten liegen vor allem auch darin, daß sie mit einem einfachen Verfahren herstellbar sind, bei dem alle Verfahrensschritte kontinuierlich ohne Zwischenstufen ablaufen und das einfach umstellbar ist, so daß bei Bedarf sofort eine entsprechend geformte starre oder elastische Sandwichplatte bereitgestellt werden kann, die z.B. eine gewünschte Wärme- oder Kältedämmung oder auch Stoßabsorptionseingenschaft aufweist.

Im folgenden wird die Erfindung anhand der Zeichnungen näher erläutert. Es zeigen:
- Figur 1:: das Verfahrensprinzip zur Herstellung erfindungsgemäßer Sandwichplatten,
- Figur 2:: eine Ansicht auf eine Extrusionsanlage, die entgegen der Lehre der beanspruchten Erfindung einen vollflächigen Stärkeschaumkern ausbringt,
- Figur 3:: eine Ansicht auf eine Extrusionsanlage, die stabförmige Stärkeschaumstränge als Kern für die erfindungsgemäße Sandwichplatte ausbringt und
- Figur 4:: eine Ansicht auf eine Extrusionsanlage, die sich schlangenförmig windende Stärkeschaumstränge als Kern für die erfindungsgemäße Sandwichplatte ausbringt.

Nach einer bevorzugten Ausführungsform der Erfindung besteht eine erfindungsgemäße Sandwichplatte aus einem Stärkeschaumkern 1, der an seiner Ober- und Unterseite mit einem Schichtmaterial 2 verklebt ist. Das Schichtmaterial 2 besteht vorzugsweise aus biologisch abbaubarem Material, wie aus Folien aus modifizierter Stärke, Papier und/oder Pappe bzw. Karton.

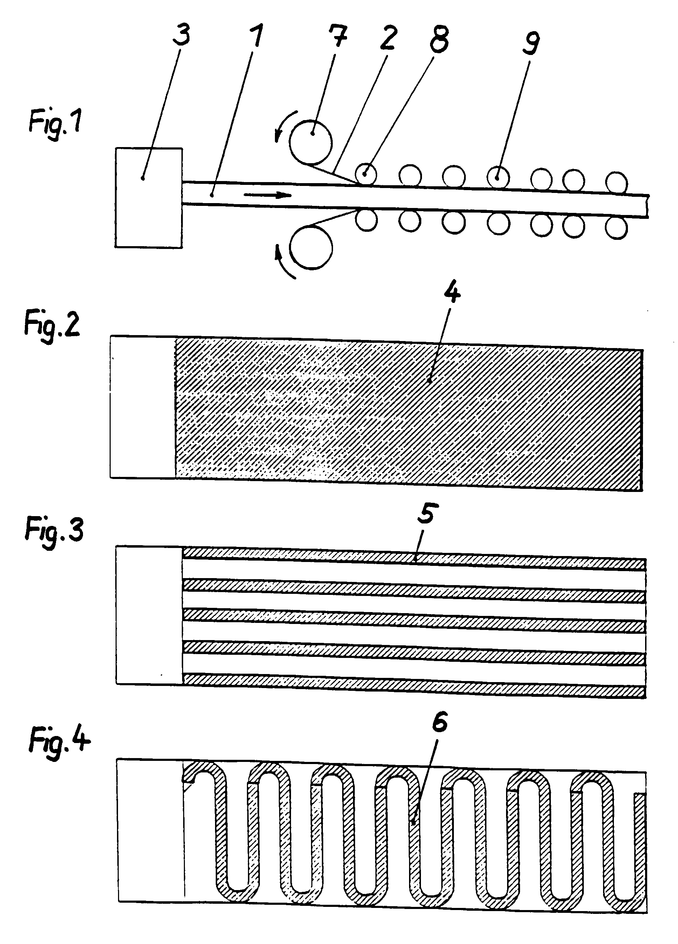

Wie Figur 1 zeigt, weist eine Anlage zur Herstellung einer erfindungsgemäßen Sandwichplatte eine Extruderanlage 3 auf, in welcher Stärkeschaum hergestellt wird und anschließend durch eine Düse als stabförmige Stränge 5 (Figur 3) oder sich schlangenförmig windende Stränge 6 (Figur 4) ausgebracht wird. In der jeweils hergestellten Form bilden die Stränge 5, 6 den Stärkeschaumkern 1 der Sandwichplatte. Unmittelbar nach dem Extrudieren wird der Stärkeschaumkern 1 zwischen zwei Bänder des Schichtmaterials 2 eingebracht. Dazu wird das Schichtmaterial 2 von zwei übereinander angeordneten Rollen 7 kontinuierlich abgerollt, über Umlenkrollen 8 gespannt und horizontal übereinanderlaufend bis zu einem bestimmten Abstand zusammengeführt. Das Schichtmaterial 2 weist dazu eine bestimmte Mindestreißfestigkeit auf. Der Stärkeschaumkern 1 wird in Abrollrichtung zwischen das Schichtmaterial 2 eingebracht, anschließend in einer Rollenpresse 9 mit dem Schichtmaterial 2 in Kontakt gebracht und zu einer Sandwichplatte verpreßt. Während dieses Vorgangs besitzt der Stärkeschaumkern 1 noch eine Mindestrestfeuchte aus dem Extrusionsverfahren, so daß die Klebeeingenschaft der Stärke aktiviert bleibt und eine Verbindung mit dem Schichtmaterial 2 hergestellt wird. Der Feuchtigkeitsentzug der Stärke kann während der Extrusion speziell eingestellt werden, oder der Stärkeschaumkern 1 kann auch vor dem Verbinden mit dem Schichtmaterial 2 an seinen Kontaktflächen befeuchtet werden. Nach dem Verlassen der Rollenpresse 9 wird das Sandwichmaterial auf Rollen aufgewickelt oder auf Länge geschnitten und gestapelt. Besonders bietet sich das Aufrollen bei Sandwichplatten mit elastischem Stärkeschaumkern 1 und einer Dicke unter 20 mm an, während dickere Sandwichplatten vorteilhafterweise gestapelt werden können. Mit diesem Verfahren sind Sandwichplatten mit beispielsweise speziellen Wärmedämmwerten oder Stoßabsorptionseigenschaften herstellbar. Je nach Verwendungszweck der Sandwichplatten kann der Stärkeschaumkern 1 eine bestimmte Dichte und Elastizität aufweisen oder Hohlräume in der Sandwichplatte bilden, wie beispielsweise bei der Verarbeitung von Stärkeschaumsträngen 5, 6. Ferner können mehrere Schichten von Stärkeschaumkernen 1 und Schichtmaterial 2 übereinander verklebt werden. Zur Veränderung gewünschter Eigenschaften können beispielsweise die Rezeptur der im Extrusionsverfahren verarbeiteten Rohstoffe oder die Verfahrensschritte des Extrusionsverfahrens selbst hinsichtlich des zeitlichen Ablaufs oder des Temperaturprofils verändert werden. Vorzugsweise besitzt das erfindungsgemäße Sandwichmaterial einen Stärkeschaumkern 1 mit einem Raumgewicht von etwa 10 bis 250 kg/m³ und ein Schichtmaterial 2 mit einem Flächengewicht von 10 bis 800 g/m².

Die erfindungsgemäßen Sandwichplatten können als Verpackungsmaterial, als Baumaterial zur Wärme-, Kälte- oder Schallisolation, als Transport- und Stoßschutz, als Display und Träger für Plakate, Poster, Bilder und Aufdrucke, sowie als konstruktive Erzeugnisse für die Möbel-, Automobil-, Bau- und Verpackungsindustrie, den Gartenbau und die Landwirtschaft, verwendet werden.

## Patentansprüche

1. Sandwichplatte bestehend aus einem Stärkeschaumkern (1) und mindestens einem Schichtmaterial (2), dadurch gekennzeichnet, daß der Stärkeschaumkern (1) ein elastischer oder gehärteter Stärkeschaum ist und aus stabförmigen Strängen (5) oder aus sich schlangenförmig windenden Strängen (6) von Stärkeschaum besteht.

2. Sandwichplatte nach Anspruch 1, dadurch gekennzeichnet, daß das Schichtmaterial (2) aus biologisch abbaubarem Material besteht, vorzugsweise aus modifizierter Stärke, Papier und/oder Pappe bzw. Karton und/oder Folie.

3. Sandwichplatte nach Anspruch 1 oder 2, dadurch gekennzeichnet, daß der Stärkeschaumkern (1) ein Raumgewicht von 10 bis 250 kg/m³ und das Schichtmaterial (2) ein Flächengewicht von 10 bis 800 g/m² besitzt.

4. Verfahren zum Herstellen einer Sandwichplatte nach einem der Ansprüche 1 bis 3, mit den Schritten:
(a) Herstellen des Stärkeschaumes in einer Extruderanlage (3) und Ausbilden des Stärkeschaumkerns (1),
(b) unmittelbar darauffolgend kontinuierliches Einbringen des Stärkeschaumkerns (1) als stabförmige Stränge (5) oder als sich schlangenförmig windende Stränge (6) in situ zwischen das Schichtmaterial (2) und
(c) Verdichten des Stärkeschaumkerns (1) und gleichzeitiges Verbinden mit dem Schichtmaterial (2) zum Ausbilden der Sandwichplatte.

5. Verfahren nach Anspruch 4, dadurch gekennzeichnet, daß der Stärkeschaum mit einem Raumgewicht von 10 bis 250 kg/m³ extrudiert wird.

6. Verfahren nach einem der Ansprüche 4 oder 5, dadurch gekennzeichnet, daß der Stärkeschaumkern (1) mit einem Schichtmaterial (2) aus biologisch abbaubarem Material, vorzugsweise aus modifizierter Stärke, Papier und/oder Pappe bzw. Karton und/oder Folie verbunden wird.

7. Verfahren nach einem der Ansprüche 4 bis 6, dadurch gekennzeichnet, daß der Stärkeschaumkern (1) unmittelbar nach der Extrusion zwischen das Schichtmaterial (2) gebracht und damit verbunden wird.

8. Verfahren nach einem der Ansprüche 4 bis 7, dadurch gekennzeichnet, daß bei harter Einstellung des Stärkeschaumkerns (1) und/oder einer Dicke der Sandwichplatte von mehr als 20 mm an den Verfahrensschritt (c) anschließend die Sandwichplatte auf eine vorbestimmte Länge geschnitten wird.

9. Verwendung der Sandwichplatte nach einem der Ansprüche 1 bis 3, bzw. hergestellt nach dem Verfahren nach einem der Ansprüche 4 bis 8, als Baumaterial zur Wärme-, Kälte-, Schall- und Schockabsorption, als Verpackungsmaterial für Transport- und Stoßschutz, als Display und Träger für Plakate, Poster, Bilder, und als konstruktive Erzeugnisse für die Möbel-, Automobil-, Bau- und Verpackungsindustrie, den Gartenbau und die Landwirtschaft.

## Claims

1. A sandwich panel consisting of a starch foam core (1) and at least one layer material (2), characterized in that the starch foam core (1) is a resilient or hardened starch foam and consists of rod-like strands (5) or strands (6) winding like a snake which are made of a starch foam.

2. The sandwich panel according to claim 1, characterized in that the layer material (2) consists of a biodegradable material, preferably modified starch, paper and/or paperboard or cardboard and/or a sheet or foil.

3. The sandwich panel according to claim 1 or 2, characterized in that the starch foam core (1) has a specific weight of 10 to 250 kg/m³ and the layer material (2) has a aerial weight of 10 to 800 g/m².

4. A method for preparing a sandwich panel according to any one of claims 1 to 3, comprising the steps of
(a) preparing the starch foam in an extruder arrangement (3) and forming the starch foam core (1),
(b) immediately afterwards continuous introduction of the starch foam core (1) in situ between the layer material (2) as rod-like strands (5) or as strands (6) winding like a snake, and
(c) compacting the starch foam core (1) and simultaneously bonding it to the layer material (2) to form the sandwich panel.

5. The method of claim 4, characterized in that the starch foam is extruded with a specific weight of 10 to 250 kg/m³.

6. The method of any one of claims 4 or 5, characterized in that the starch foam core (1) is bonded to a layer material (2) made of a biodegradable material, preferably modified starch, paper and/or paperboard or cardboard and/or a sheet or foil.

7. The method of any one of claims 4 to 6, characterized in that immediately after extrusion the starch foam core (1) is introduced between the layer material (2) and bonded thereto.

8. The method of any one of claims 4 to 7, characterized in that with a hard adjustment of the starch foam core (1) and/or a thickness of the sandwich panel of more than 20 mm the sandwich panel is cut into a predetermined length subsequent to method step (c).

9. Use of the sandwich panel according to any one of claims 1 to 3 or prepared according to the method of any one of claims 4 to 8 as a construction material for heat, low temperature, sound and shock absorption, as a packaging material for protection during transport and against shock, as a display and carrier for placards, posters, pictures, and as constructive products for the furniture, automobile, construction and packaging industry, for horticulture and agriculture.

## Revendications

1. Panneau sandwich composé d'un noyau en amidon expansé (1) et d'au moins une matière de revêtement (2),
caractérisé en ce que
le noyau d'amidon expansé (1) est de l'amidon expansé élastique ou durci et se compose de cordons (5) en forme de tiges ou de cordons (6) enroulés en méandres en amidon expansé.

2. Panneau sandwich selon la revendication 1,
caractérisé en ce que
la matière de revêtement (2) est une matière biodégradable, de préférence de l'amidon modifié, du papier et/ou du carton ou du carton épais et/ou une feuille.

3. Panneau sandwich selon la revendication 1 ou 2,
caractérisé en ce que
le noyau de mousse expansée (1) a une densité volumique de 10 à 250 kg/m³ et la matière de revêtement (2) a une densité de surface de 10 à 800 g/m².

4. Procédé de fabrication d'un panneau sandwich selon l'une des revendications 1 à 3, comprenant les étapes suivantes :
a) fabrication d'amidon expansé dans une installation d'extrusion (3) et formation du noyau d'amidon expansé (1),
b) puis introduction directement consécutive, continue, du noyau d'amidon expansé (1) sous la forme de cordons en tiges (5) ou d'un cordon (6) enroulé en méandres, in situ, entre la matière de la couche (2) et
c) compression du noyau d'amidon expansé (1) et réunion simultanée avec la matière de revêtement (2) pour laisser prendre la plaque sandwich.

5. Procédé selon la revendication 4,
caractérisé en ce que
l'amidon expansé est extrudé à une densité volumique de 10 à 250 kg/m³.

6. Procédé selon l'une des revendications 4 à 5,
caractérisé en ce que
le noyau d'amidon expansé (1) est lié à une matière de revêtement (2) en une matière biodégradable, de préférence en amidon modifié, en papier et/ou en carton ou en carton épais et/ou feuille.

7. Procédé selon l'une des revendications 4 à 6,
caractérisé en ce que
le noyau d'amidon expansé (1) est introduit directement après l'extrusion entre la matière de revêtement (2) pour être relié à celle-ci.

8. Procédé selon l'une des revendications 4 à 7,
caractérisé en ce que
pour un réglage dur du noyau d'amidon expansé (1) et/ou une épaisseur du panneau sandwich supérieure à 20 mm, à la suite de l'étape de procédé (c) on coupe le panneau sandwich à une longueur prédéterminée.

9. Utilisation du panneau sandwich selon l'une des revendications 1 à 3 ou fabriqué selon le procédé de l'une des revendications 4 à 8 comme matériau de construction pour l'isolation thermique, positive ou négative, l'isolation phonique et l'isolation contre les chocs, comme matériau d'emballage pour le transport et la protection contre les chocs, comme moyen de présentation et comme support de placard, de poster, d'image, ou encore comme produit de construction pour l'industrie du meuble, l'industrie automobile, l'industrie de la construction ou de l'emballage, le jardinage et l'agriculture.
